Europäisches Patentamt

European Patent Office

Office européen des brevets

(11) Veröffentlichungsnummer: **0 424 896 A1**

(19)

## EUROPÄISCHE PATENTANMELDUNG

(12)

(21) Anmeldenummer: 90120357.0

(22) Anmeldetag: **24.10.90**

(51) Int. Cl.5: **C08J 3/20, C09C 3/04, C09C 3/08, C09C 3/10, C08K 9/04, C08K 9/08**

(30) Priorität: **27.10.89 DE 3935815**

(43) Veröffentlichungstag der Anmeldung: **02.05.91 Patentblatt 91/18**

(84) Benannte Vertragsstaaten: **AT BE CH DE DK ES FR GB GR IT LI LU NL SE**

(71) Anmelder: **DEGUSSA AG
Weissfrauenstrasse 9
W-6000 Frankfurt (Main)(DE)**

(72) Erfinder: **Scheffler, Jochen, Dr.
Wielandstrasse 3
W-5300 Bonn 2(DE)**
Erfinder: **Thoma, Herbert
Peterstrasse 57
W-5357 Swisttal 7(DE)**
Erfinder: **Barthel, Klaus-Dieter
Narzissenweg 21
W-5205 St. Augustin 1(DE)**

(54) **Staubarmes Pigment- bzw. Farbstoff-Feingranulat.**

(57) Gegenstand der Erfindung ist ein staubarmes, leicht zu desagglomerierendes Feingranulat aus Pigment oder Farbstoff mit sehr niedrigem Gehalt an Bindemittel und sonstigen Fremdstoffen, welches aus pulverförmigem Ausgangsmaterial durch einen Herstellungsgang erhältlich ist, bei dem unter Verwendung spezieller Mischeinrichtungen die Einbringung des Bindemittels in Dispersionsform unter Einhaltung eines kritischen Granulationsstadiums erfolgt.

EP 0 424 896 A1

## STAUBARMES PIGMENT- BZW. FARBSTOFF-FEINGRANULAT

Die Erfindung betrifft ein staubarmes Pigment- bzw, Farbstoff-Feingranulat, welches eine gute Transportstabilität, eine leichte Verarbeitbarkeit, insbesondere aufgrund einer günstigen Dispergierhärte, und eine gegenüber dem pulverförmigen Ausgangsstoff praktisch unveränderte oder sogar verbesserte Koloristik aufweist.

Bei Herstellung, Transport und Weiterverarbeitung pulverförmiger Pigmente oder Farbstoffe, insbesondere schwermetallhaltiger und damit toxikologisch bedenklicher Pigmente, müssen aufwendige Vorkehrungen getroffen werden, um Verunreinigungen von Anlagen und Umgebungsluft durch Staubemissionen zu vermeiden. Bei der Handhabung von Stäuben organischer Farbstoffe besteht außerdem die Gefahr von Staubexplosionen. Insoweit wurden zahlreiche Versuche unternommen, staubarme Pigment- bzw. Farbstoffzubereitungen zu entwickeln, in denen das Pigment- bzw, Farbstoffpulver unter Zusatz von Bindemitteln der verschiedensten Art angepastet oder granuliert wird. Wegen der leichteren Handhabung bei Dosierung, Verpackung, Transport und Entnahme aus der Verpackung kommt den Pasten, Pastillen und Granulaten besondere Bedeutung zu.

Staubfreie Farbpigmentzusammensetzungen für die Einfärbung von Kunststoffen lassen sich z. B. gemäß der DE-OS 36 37 770 in Pastillenform gewinnen, wenn man in die Schmelze eines bei Raumtemperatur festen Bindemittels, das gleichzeitig als Kunststoff-Verarbeitungsmittel brauchbar ist, und einen Schmelzpunkt unter dem Zersetzungspunkt des Pigmentes hat, bis zu 99 Gew.%, bezogen auf die Gesamtmischung, des jeweiligen Pigments einträgt, gegebenenfalls die Schmelze naßmahlt und die gebildete Suspension durch Tropfen auf eine gekühlte Fläche zu Pastillen formt.

Staubarme anorganische Pigmentgranulate können auch durch intensives Vermischen von gepulverten anorganischen Pigmenten, wie $Cr_2O_3$, $TiO_2$, Spinellphasen oder Cadmiumpigmenten mit feingemahlenen wachsartigen, polymeren Bindemitteln in trockenem Zustand und Behandeln in rotierenden beheizten Vorrichtungen, wie Trommeln oder Drehtellern, bei Temperaturen, bei denen das Bindemittel in flüssiger Form vorliegt, granuliert werden. Anschließend können die thermoplastischen Eigenschaften der Granulate beim Durchdrücken durch Siebe bei Temperaturen nahe der Erweichungstemperatur des Bindemittels zur Unterdrückung des zu hohen Feinanteils ausgenutzt werden - DE-OS 31 32 303.

Neben der Verwendung von Bindemitteln in geschmolzenem Zustand sind auch schon Anstrengungen unternommen worden, durch Einsatz von flüssigen Granulierhilfsmitteln, wie Wasser oder Mineralölen, zu nichtstaubenden Pigment- und farbstoffpräparaten in Granulatform zu gelangen.

So sind aus der EP-PS 0 144 940 bereits stark dauerhaft staubungsfreie Pigment- und Farbstoffpräparate mit einem Zusatz von oberflächenaktiven Mitteln und Zusatzstoffen bekannt, welche erhalten werden können, indem man dem Filterschlamm des Pigmentes oder des Farbstoffes mindestens ein oberflächenaktives Mittel in einer Menge von 0,5 - 10 Gew.%, bezogen auf das Gesamtgewicht des Endproduktes, zusetzt und nach homogener Verteilung die Kombination aus Pigment und oberflächenaktivem Mittel, gegebenenfalls nach Isolierung als Preßkuchen, trocknet und das getrocknete Produkt danach mit Wasser, Mineralöl oder einer flüssigen oder bei 50° C, insbesondere bei 50 - 200° C flüssigwerdenden Wachsbzw. Paraffinsubstanz, die bei intensiver Scherbeanspruchung das Gemenge zum Schmierpunkt führen, in einer Menge von 2 - 25 Gew.%, bezogen auf das Gesamtgewicht des Endproduktes, versetzt und unter Anwendung einer intensiven Scherbeanspruchung mischt, bis der Schmierpunkt erreicht ist und dann gegebenenfalls in an sich bekannter Weise nachgranuliert,

Das bekannte Verfahren geht also von einem Filterschlamm des Pigments oder Farbstoffs aus, in welchen ein Tensid eingearbeitet werden muß, worauf eine Trocknung erfolgt. Die Überführung in ein Feingranulat erfordert den Zusatz flüssiger Granulierhilfsmittel in der relativ hohen Dosierung von 2 - 25 Gew.%, bezogen auf das Gesamtgewicht des Endprodukts. Dieses Hilfsmittel, nach den Ausführungsbeispielen ein Mineralöl oder geschmolzenes Wachs, verbleibt in diesen Mengen im Endprodukt.

Daneben an soll auch Wasser zur Granulierung einsetzbar sein, welches denselben Restwassergehalt des Granulats bedingt, wenn dieses staubfrei bleiben soll. Zur Herbeiführung des Feingranulats wird die Anwendung intensiver Scherbeanspruchung vorgeschlagen.

Es wurde nun gefunden, daß diese bei mechanisch empfindlichen Pigmenten bzw. Farbstoffen zu einer Beeinträchtigung der koloristischen Eigenschaften führt und daneben die Dispergierbarkeit bei der Weiterverarbeitung verschlechtert.

Es bestand daher ein Bedarf an einem staubarmen, leicht desagglomerierbaren Feingranulat aus Pigmenten oder Farbstoffen mit einem möglichst niedrigen Bindemittelgehalt und einer gegenüber dem pulverförmigen Ausgangsprodukt praktisch unveränderten Koloristik sowie an geeigneten Verfahrensmaßnahmen, die sich zur Schaffung solcher Feingranulate eignen.

Gegenstand der Erfindung ist demgemäß ein staubarmes, leicht desagglomerierbares Feingranulat aus Pigment oder Farbstoff zur homogenen und farbechten Einfärbung von thermoplastischen Kunststoffen. Das Feingranulat ist gekennzeichnet durch einen Gehalt von nicht mehr als 1 Gew.% eines wachsartigen Bindemittels sowie eines unterhalb 0,5, vorzugsweise 0,3 Gew.-%, liegenden Restgehalts von Emulgator und gegebenenfalls Netzmittel und nach einem Verfahrensgang erhältlich, bei dem man das Pigment bzw. den Farbstoff in Pulverform in einem vorwiegend Turbulenz und Prallkräfte erzeugenden Mischgranulator mit einer 1 - 6, vorzugsweise 2 - 4 Gew.%igen, gegebenenfalls Netzmittel enthaltenden wäßrigen Dispersion des wachsartigen Bindemittels in einer dem gewünschten Bindemittelgehalt des Endprodukts entsprechenden Menge, vorzugsweise durch Aufsprühen, zu setzt, die unter Volumenverminderung der Mischung verlaufende Granulierung nicht länger als bis zur Ausbildung eines feinkörnigen Granulats vornimmt, das Granulat aus dem Mischgranulator entnimmt, durch Trocknen entwässert und gegebenenfalls einem Siebvorgang zur Einengung des Kornspektrums unterwirft.

Das erfindungsgemäße Feingranulat vereinigt in besonders günstiger Weise eine Reihe von anwendungstechnischen Vorteilen: Es hat einen hohen Pigment- bzw, Farbstoffgehalt. Trotz des herabgesetzten Bindemittelgehalts weist das Granulat eine gute mechanische Festigkeit bei gleichzeitig guter Dispergierbarkeit in thermoplastischen Polymeren oder solche Polymeren enthaltenden Massen auf. Damit ist ein Weg zur Erzielung eines günstigen Kompromisses zwischen an sich gegenläufigen Forderungen, nämlich mechanische Stabilität und guter Verteilung der Pigmentpartikel im Kunststoff erschlossen. Im Rahmen der Erfindung sind Bindemittel vorgesehen, die als Gleit- und/oder Plastifiziermittel in der Verarbeitung von Polymeren eingesetzt werden und dazu geeignet sind, bei optimaler Wahrung der Polymereigenschaften weitgehend trübungsfreie Einfärbungen mit praktisch unveränderter Farbcharakteristik des pulverförmigen Pigments zu erhalten.

Als Pigmente können anorganische Pigmente, wie Cadmiumsulfoselenide, Spinelle, Rutil, Mischphasenpigmente, Lithopone, Schwerspat, Eisenoxid, Ultramarine, komplexe Eisencyanide, Chromatpigmente, Ruß in Betracht gezogen werden.

Unter organischen Farbstoffen bzw. Pigmenten sind zu nennen: Monoazopigmente, wie PV Carmin HF 3C (HOECHST AG) , Anthrachinonpigmente, Cu-Phthalocyanine.

Als besonders geeignet haben sich Feingranulate solcher Pigmente oder Farbstoffe mit wachsartigen Bindemitteln, wie Paraffinwachs, Polyethylenwachs, einer höheren Fettsäure oder Gemischen höherer Fettsäuren, einem Fettalkohol oder Gemische von Fettalkoholen, erwiesen.

Bevorzugt enthält das erfindungsgemäße Feingranulat ein Bindemittel mit einem Schmelzpunkt oder Tropfpunkt von 30 - 150, vorzugsweise 50 - 130° C. Solche Bindemittel können in einfacher und an sich bekannter Weise zu Dispersionen bzw. Emulsionen verarbeitet werden. Dazu trägt man die vorgesehene Bindemittelmenge, im allgemeinen ca. 10 Gew.% der Gesamtdispersion, in ein mit vollentsalztem Wasser, welchem 2 - 3 Gew.% eines geeigneten Emulgators und gegebenenfalls 0,5 - 1 Gew.% eines Netzmittels zugesetzt sind, Gefäß, gegebenenfalls ein Druckgefäß, unter Aufheizen auf Temperaturen oberhalb des Bindemittelschmelzpunkts und gleichzeitigem intensiven scherenden Rühren ein und kühlt dann unter Fortsetzen des Rührens bis zur Unterschreitung des Bindemittelschmelzpunkts (bei Emulsionen) bzw. auf Raumtemperatur (bei Dispersionen) ab.

Von wesentlicher Bedeutung für das erfindungsgemäße Verfahren ist die Verwendung eines Geräts zur Mischgranulation, in dem das Beschickungsgut überwiegend starker Turbulenz und mäßigen Prallkräften ausgesetzt wird und scherende Beanspruchungen dagegen zurücktreten.

Gut verwendbar ist der sog. Pflugscharmischer der Fa. Lödige, D - 4790 Paderborn, mit einer horizontal angeordneten, feststehenden zylindrischen Mischguttrommel, welche bei 30 - 70 %iger Füllung mittels rotierenden, pflugscharähnlichen Schleuderschaufeln eine wirbelnde dreidimensionale Bewegung des Mischgutes bewirkt. In diesem Gerät findet an jeder Stelle des Mischraums Materialtransport statt. Bedingt durch Form, Anstellwinkel und Rotation der Schleuderschaufeln wird das Mischgut von der Trommelwand laufend abgehoben und ein Zerquetschen von Mischgutteilchen zwischen Schaufelrücken und Wandung vermieden. Es werden hierdurch hohe Mischgenauigkeiten, kurze Verweilzeiten und eine besonders schonende Behandlung des Mischguts erreicht.

Besonders eignen sich Geräte mit einem drehenden, geneigt angeordneten Mischgutbehälter und einem darin asymmetrisch angeordneten Wirblerwerkzeug und mit Materialumlenkern. Ein Beispiel dafür sind die von Fa. Eirich, D - 6969 Hardheim, vertriebenen Intensivmischer.

Es hat sich bei der erfindungsgemäßen Anwendung einer solchen Maschine als zweckmäßig erwiesen, auf Innenwänden und/oder Mischorganen eine adhäsions- und reibungsvermindernde Beschichtung, vorzugsweise aus Polytetrafluorethylen, durch Kleben oder durch Schmelzbeschichtung anzubringen.

Dadurch wird die an sich schon geringe Beaufschlagung des Mischguts mit Scherkräften weiter herabgesetzt.

Das in dem erfindungsgemäßen Produkt gegebenenfalls vorhandene Netzmittel sollte so gewählt werden, daß eine Verträglichkeit mit denjenigen Kunststoffen gegeben ist, in denen das erfindungsgemäße Feingranulat später eingearbeitet werden soll. In schwermetallhaltigem Pigment- oder Farbstoff-Feingranulat, z.B. auf Basis von Cadmiumsulfoselenid, Cobalt-, Nickel- und Chrom-haltigem Spinell, Ultramarin, Rutil o. ä. und für Kunststoffe, wie Polycarbonat, Polyoxymethylen, High Density Polyethylen, Acrylnitril/Butadien/Styrol-Pfropfcopolymer und Styrol/Acrylnitril-Copolymer kann als Netzmittel ein kationisches, nichtionisches, anionisches oder fluorhaltiges Tensid vorliegen. Beispielhaft seien genannt:

Kationische Tenside, wie Diisobutylphenoxyethoxyethyl-Dimethylbenzylammoniumchlorid (Hyamine 1622, Fa. Rohm & Haas) ;

Fluorhaltige Tenside, wie das Ammoniumsalz eines Fluoralkylsulfonamidderivats (FT 448, Bayer AG);

Nichtionische Tenside, wie Triethanolamin, Blockpolymer durch Copolymerisation von Propylenoxid und Ethylenoxid gewonnen (Synperonic PE/F 108, Fa. C.H. Erbslöh), 2-Amino-2-methyl-1-propanol mit 5 % Wasser (AMP 95, Fa. Angus Chemie).

Zur Bereitung von Dispersionen bzw. Emulsionen der Bindemittel geeignete Dispergiermittel bzw. Emulgatoren sind beispielsweise eine Mischung aus Fettalkoholpolyglykolether und einem Fettsäuregemisch (Lamacit AP 6) , Kaliumsalz eines Fettsäure-Kondensats (Arlypon S) Fettalkoholpolyglykolether (Arlypon SA) jeweils Chem. Werke Grünau Illertissen.

Wie aus der Granuliertechnik allgemein bekannt ist, treten auch hier gewisse Abhängigkeiten zwischen Herstellungsparametern und Eigenschaftsparametern des Endprodukts auf: So nehmen z. B. mit steigender Mischzeit im allgemeinen der grobkörnige Anteil, die Dispergierhärte, die Farbstärke sowie die Farbtonabweichung zu, während bei zunehmender Dispersionsmenge ein weicheres Granulat, d. h. ein Granulat mit geringerer Dispergierhärte anfällt. Über eine geeignete Abstimmung der Herstellparameter können die erfindungsgemäßen Feingranulate in ihren Eigenschaften beeinflußt werden.

Der wesentliche Gedanke der Erfindung ist jedoch die eingesetzte überaus geringe Bindemittelmenge, welche durch den Einsatz einer feinteiligen Dispersion bzw. Emulsion des Bindemittels in Verbindung mit dem Einsatz spezieller Mischgranulatoren ermöglicht wird. Die Mischzeit selbst wird durch den eingesetzten Pigment-bzw. Farbstofftyp beeinflußt.

Zusammenfassend weist das erfindungsgemäße Produkt folgende Vorteile auf:

1. Staubarmut

Geringe Belastung der Atemluft bei der Handhabung bzw. Weiterverarbeitung der Pigmentperlen;

2. Abriebfestigkeit

Geringe Erhöhung des Staubgehalts nach mechanischer Beanspruchung wie Transport, Handhabung und Dosierung;

3. Gegenüber dem Pigment weitgehend unveränderte koloristische Eigenschaften;

4. Regelmäßig Erzielung höherer Farbstärke gegenüber dem Pigmentpulver;

5. Sehr geringer Bindemittelgehalt;

6. Geringe elektrostatische Aufladung der Pigmentperlen;

7. Gute Rieselfähigkeit, damit gute Förder- und Dosierbarkeit;

8. Hohes Schüttgewicht, dadurch geringere Verpackungskosten gegenüber Pulver.

Die Erfindung wird im folgenden anhand von Ausführungsbeispielen zu Herstellung und Anwendung der erfindungsgemäßen Produkte weiter erläutert.

A) Die in den Ausführungsbeispielen verwendeten Dispersionen wachsartiger Bindemittel wurden wie folgt hergestellt:

Rezeptur I

Eine Mischung aus 10 Gew.% Kohlenwasserstoff-Wachs mit einem Schmelzpunkt von 113° C, Kunststoff-Additiv Hostalub H4 (HOECHST AG, Frankfurt) 2,5 Gew.% Emulgator Lamacit AP6 (Chem. Werke Grünau GmbH, Illertissen) , 1 Gew.% Netzmittel (Triethanolamin) und 86,5 Gew.% vollentsalztes Wasser wird in einem Druckgefäß bis auf 135° C aufgeheizt und 2,5 h mit einem Scheraggregat einer intensiven Dispergierung unterzogen. Danach wird auf 70° C abgekühlt. Diese Wachsdispersion mit einem Wachsgehalt von 10 Gew.% wird gegebenenfalls unter Rühren auf einen Wachsgehalt von ca. 0,5 - 7,0 Gew.% mit vollentsalztem Wasser (VE-Wasser) verdünnt.

Rezeptur II (ohne Netzmittel)

Eine Mischung aus 10 Gew.% einer Fettsäuremischung definierter Kettenlängenverteilung mit einem Schmelzpunkt von 57 - 61° C (PVC-Gleitmittel FTA der Chemischen Werke O. Bärlocher GmbH, München), 3 Gew.% einer Emulgator-Mischung zu gleichen Teilen aus Arlypon SA 10 und Arlypon S, (Chem. Werke Grünau GmbH, Illertissen) und 86,5 Gew.% vollentsalztes Wasser wird in einem Gefäß unter Rühren 2 h auf 85° C erhitzt und unter intensivem Scheren langsam (15 -30 min) auf 18° C abgekühlt. Diese 10 Gew.%ige Wachsdispersion wird gegebenenfalls unter Rühren auf einen Wachsgehalt von ca. 0,5 - 7,0 Gew.% mit VE-Wasser verdünnt.

Rezeptur III

Eine Mischung aus 10 Gew.% einer langkettigen Fettsäure mit einem Schmelzpunkt von 57 - 61° C (wie in Rezeptur II angegeben) , 3,0 Gew. % einer Emulgator-Mischung zu gleichen Teilen aus Arlypon SA 10 und Arlypon 5 (Chem. Werke Grünau GmbH, Illertissen) , 0,5 Gew.% Triethanolamin und 86,5 Gew.% vollentsalztes Wasser wird in einem Gefäß unter Rühren 2 h auf 85° C erhitzt und unter intensivem Scheren langsam (15 - 30 min) auf 18° C abgekühlt. Diese 10 Gew.%ige Wachsdispersion wird gegebenenfalls unter Rühren auf einen Wachsgehalt von 2,0 - 3,0 Gew.% mit VE-Wasser verdünnt.

Rezeptur IV

Wie Rezeptur III, wobei anstelle des Fettsäuregemischs ein Kohlenwasserstoffwachs (PVC-Gleitmittel LKK (Schmelzpunkt 50 - 80° C) der Chem. Fabrik O. Bärlocher GmbH, München), eingesetzt wird.

Rezeptur V

Wie Rezeptur II, wobei nach Herstellung der Wachsdispersion ein Fluortensid der Fa. Bayer AG, Leverkusen, Typ FT 448, in Konzentrationen von 0, 1 Gew.% (Rezeptur Va) bzw. von 0,01 Gew.% (Rezeptur Vb) zugefügt wird. (diese Konzentrationsangaben hier und in den Rezepturen VI - VIII sind bezogen auf das Gewicht der unverdünnten, jeweils 10 Gew.% wachsartiges Bindemittel enthaltenden Wachsdispersion).

Rezeptur VI

Wie Rezeptur II, wobei nach Herstellung der Wachsdispersion ein Tensid der Fa. Rohm & Haas Deutschland GmbH, Frankfurt mit der Bezeichnung Hyamine 1622 in Konzentrationen von 0,5 Gew.% (Rezeptur VIa) bzw. 0,01 Gew.% (Rezeptur VIb) zugesetzt wird.

Rezeptur VII

Wie Rezeptur II, wobei nach Herstellung der Wachsdispersion ein Tensid der Fa. C.H. Erbslöh, Düsseldorf mit der Bezeichnung Synperonic PE/F 108 in einer Konzentration von 0,1 Gew.% zugesetzt wird.

Rezeptur VIII

Wie Rezeptur II, wobei nach Herstellung der Wachsdispersion ein Tensid der Fa. Angus Chemie GmbH, Ibbenbühren mit der Bezeichnung AMP 95 in Konzentrationen von 1,0 Gew.% (Rezeptur VIIIa) bzw. 0,1 Gew.% (Rezeptur VIIIb) verwendet wird.

B) Granulationsvorgang

Die Granulation der pulverförmigen Pigmente erfolgt in Pflugscharmischern der Fa. Lödige, Paderborn (Typ M5 oder FM 50) oder in einem Mischer der Fa. Eirich, Hardheim (Typ R 02). Die Dispersion des wachsartigen Bindemittels wird bei laufendem Aggregat über eine Einstoffdüse auf das Pigment aufgesprüht.

C) Trocknung des Feuchtgranulats

Die Trocknung des Feuchtgranulats kann grundsätzlich in einem beliebigen Trocknungsaggregat vollzogen werden. Gewählt wurde ein Umluft-Trockenschrank (Trocknungstemperatur: 120 - 130° C)

D) Siebung des getrockneten Granulats (Rohgranulat)

Grob- (> 1 mm) und Feinanteile (< 0,1 mm) werden durch einen schonenden Siebvorgang von der Hauptfraktion abgetrennt und bei Bedarf dem Granulat zurückgeführt. Verwendet wurde eine Siebmaschine der Fa. Allgaier, Uhingen (Typ ATS 600).

E) Prüfmethoden

Das nach A) bis D) erhaltene Trockengut wurde nach den nachstehend genannten Prüfungsmethoden bewertet:

a) Schüttgewicht

Die Bestimmung des Schüttgewichts erfolgte nach DIN 53468, wobei ausschließlich die unter Punkt D angegebene Hauptfraktion untersucht wurde.

b) Siebfraktionen

Die Bestimmung der Granulatkörnung des Rohgranulats wurde mit einer Retsch Labor-Siebmaschine Typ Vibro (2 Siebeinsätze: 0,1mm 1mW (lichte Maschenweite) 1 mm 1mW) durchgeführt.
Geräte-Einstellung:
Siebdauer: 30 min
Amplitude: 40
Trockengranulateinwaage: 60 g

c) Farbstärke: (DIN 150 787 XVI , XXIV)

Die Prüfung der relativen Farbstärke der sog. Hauptfraktion (im Vergleich zum eingesetzten Pulver) erfolgte in einer Leinöl/Weißpigmentpaste (1 Teil Pigmentgranulat, 10 Teile Weißpigmentpaste) mit Hilfe einer Teller-Farbenausreibmaschine, wobei nach insgesamt 400 Umdrehungen die koloristische Messung durchgeführt wurde.

d) Dispergierhärte:

Die Bestimmung erfolgte nach DIN 53 238, Teil 11, Rezeptur wie unter Punkt c) angegeben, (die Höhe der Dispergierhärte der Pigmentgranulate gestattet eine Abschätzung Einarbeitbarkeit des Pigmentgranulats in den Kunststoff).

e) Abrieb

Zur Beurteilung der mechan. Beständigkeit der Granulate wurden jeweils 30 g des betreffenden Granulats (Kornfraktion > 0,1 mm < 1 mm) in einen sog. ROCHE-Friabilator der Fa. Erweka eingetragen und einem intensiven Roll- und Fallverschleiß ausgesetzt.

Verweilzeit: 60 min
Drehzahl: 25 min$^{-1}$
Gesamtumdrehungszahl: 1500 Umdrehungen


f) Koloristische Beurteilung (DIN 5033/6174):

Zur koloristischen Beurteilung wurde das Pigmentgranulat in eine PVC-Plastisol-Folie mit einer Pigmentierung von 10 - 20 Gew.% -vorzugsweise zwischen 14 - 17 Gew.% -eingearbeitet. Die Bestimmung der Farbabstände der Pigmentgranulate in Relation zum eingesetzten Pigmentpulver wurde mittels Datacolor-Spektralfotometer (DC 3890) (Lichtart D 65/10° Normalbeobachter, Meßgeometrie d/8° durchgeführt und nach der CIELAB-Formel berechnet, wobei der Farbabstand in dem Buntheitsbeitrag $\Delta C_{ab}^*$ und in dem Bunttonbeitrag $\Delta H_{ab}^*$ dargestellt wurde.

Alle mengenbezogenen Prozentangaben (%) in den folgenden Ausführungsbeispielen beziehen sich auf Gewichtsprozent.


Beispiele 1 - 3

Jeweils 2 bzw. 4 kg eines Cadmiumsulfid- (Typ 1090, Degussa) bzw. Cadmiumsulfoselenidpigments (Typ 3001, Degussa) werden in einem Eirich-Mischer Typ R 02 eingetragen und während einer Zeit von 1 - 3 min. mit einer mit VE-Wasser verdünnten Wachsdispersion (Rezeptur I) bei laufendem Mischer (Wirbeldrehzahl 900 Upm, Trommeldrehzahl 64 Upm) über eine Einstoffdüse besprüht.

Nach Mischzeiten von 2 bis 10 min. wird das Feuchtgranulat (Wassergehalt ca. 20 Gew.%) entnommen, getrocknet und versiebt:

| Beisp. | Pigm. | Mischz. min. | Pigm.-Menge kg | Dispersion | |
|---|---|---|---|---|---|
| | | | | Menge kg | Wachsgeh. Gew.% |
| 1 | 1090 | 5 | 2 | 0,515 | 2,9 |
| 2 | 1090 | 10 | 4 | 1.03 | 2,9 |
| 3 | 3001 | 2 | 2 | 0,515 | 2,9 |

| Anwendungstechn. Prüfung | | | |
|---|---|---|---|
| | Beisp. 1 | Beisp. 2 | Beisp. 3 |
| Kornspektrum | | | |
| > 1 mm | 45,8 % | 19,7 % | 77,5 % |
| < 1 mm > 01 mm | 53,5 % | 78,9 % | 22,4 % |
| < 0,1 mm | 0,7 % | 1,4 % | 0,1 % |
| Schüttgewicht | 1,3 kg/l | 1,3 kg/l | 1,3 kg/l |
| Abrieb | 1,0 % | 1,5 % | 0,8 % |
| Dispergierhärte | 28 | 16 | 4 |
| Farbstärke | 108 % | 109 % | 106 % |
| Farbabstand $\Delta C^*$ | 0,8 | 0,5 | 0,6 |
| $\Delta H^*$ | 0,0 | 0,0 | 0,1 |

Beispiel 4 und 5

Jeweils 20 kg eines Cadmiumsulfid- (Typ 1090, Degussa) oder Cadmiumzinksulfidpigments (Typ 1020, Degussa) werden in einem Lödige-Mischer Typ FM 50, der mit PTFE-Folie ausgekleidet ist und als Mischwerkzeug eine sog. Stollenpflugschar hat, eingetragen und mit einer mit VE-Wasser verdünnten Wachsdispersion (Rezeptur I) bei laufendem Mischer (Rotordrehzahl 190 Upm, Messerkopfdrehzahl 3000 Upm) über eine Einstoffdüse besprüht. Nach einer Mischzeit von 7 bzw. 11 min. wird das Feuchtgranulat (Wassergehalt 17,75 - 20 Gew.%) entnommen, getrocknet und versiebt.

| Beisp. | Pigm. | Mischz. min. | Dispersion | |
|---|---|---|---|---|
| | | | Menge kg | Wachsgeh. Gew.% |
| 4 | 1090 | 7 | 5.032 | 3,0 |
| 5 | 1020 | 11 | 4,5 | 3,3 |

| Anwendungstechn. Prüfung | | |
|---|---|---|
| | Beisp. 4 | Beisp. 5 |
| Kornspektrum | | |
| > 1 mm | 11,3 % | 30,8 % |
| < 1 mm > 01 mm | 87,5 % | 66,8 % |
| < 0,1 mm | 1,1 % | 2,4 % |
| Schüttgewicht | 1,31 kg/l | 1,46 kg/l |
| Abrieb | 1,0 % | 2,1 % |
| Dispergierhärte | 45 | 43 |
| Farbstärke | 127 % | 105 % |
| Farbabstand $\Delta C^*$ | 0,7 | 0,7 |
| $\Delta H^*$ | 0,0 | 0,1 |

Beispiele 6 - 8

1,5 und 2 kg eines Cadmiumsulfid- (Typ 1090, Degussa AG) Kobaltspinell- (Typ 5100, Degussa AG) bzw. Ultramarinpigments werden in einem Lödige-Mischer Typ M5, dessen Innenwand mit einer verschleißfesten Kunststoff-Beschichtung versehen wurde, eingetragen und mit einer mit VE-Wasser verdünnten Wachsdispersion (Rezeptur I bzw. IV) bei laufendem Mischer (Rotordrehzahl 300 Upm) über eine Einstoffdüse besprüht. Nach der angegebenen Mischzeit wird das Feuchtgranulat (Wassergehalt 23 - 27 Gew.%) entnommen, getrocknet und versiebt:

| Beisp. | Pigm. | Mischz. min. | Pigm.-Menge kg | Dispersion | |
|---|---|---|---|---|---|
| | | | | Menge kg | Wachsgeh. Gew.% |
| 6 | 1090 | 1,25 | 1,5 | 0,7 | 1,6 (RIV) |
| 7 | 5100 | 12,5 | 3,0 | 0,925 | 2,25 (RI) |
| 8 | Ultramarin | 20,5 | 2,0 | 0,725 | 2,1 (RI) |

| Anwendungstechn. Prüfung | | | |
|---|---|---|---|
| | Beisp. 6 | Beisp. 7 | Beisp. 8 |
| Kornspektrum | | | |
| > 1 mm | 51,2 % | 63,4 % | 86,1 % |
| < 1 mm > 01 mm | 46,3 % | 34,8 % | 6,1 % |
| < 0,1 mm | 2,5 % | 1,8 % | 7,8 % |
| Schüttgewicht | 1,3 kg/l | 1,15 kg/l | 0,7 kg/l |
| Abrieb | 2,1 % | 0,9 % | 1,7 % |
| Dispergierhärte | 20 | 2 | 2 |
| Farbstärke | 110 % | 100 % | 103 % |
| Farbabstand ΔC* | 1,2 | 0,1 | 0,0 |
| ΔH* | 0,6 | - 0,1 | 0,5 |

Beispiele 9 - 11

2,0 oder 3,0 kg eines Titandioxidpigments (Rutil, RN56 Kronos-Titan) oder von Bariumsulfat oder einer Mischung von beiden Komponenten (1 : 1) werden in einem Lödige-Mischer Typ M5, der mit einer Kunststoff-Beschichtung ausgekleidet ist, eingetragen und mit einer mit VE-Wasser verdünnten Wachsdispersion (Rezeptur I) bei laufendem Mischer (Drehzahl des Mischwerkzeugs 300 Upm) über eine Einstoffdüse besprüht. Nach der angegebenen Mischzeit wird das Feuchtgranulat (Wassergehalt zwischen 10 - 24 Gew.%) entnommen, getrocknet und gesiebt:

| Beisp. | Pigm. | Mischz. min. | Pigm.-Menge kg | Dispersion | |
|---|---|---|---|---|---|
| | | | | Menge kg | Wachsgeh. Gew.% |
| 9 | TiO$_2$ | 13 | 2 | 0,45 | 3,3 |
| 10 | BaSO$_4$ | 11 | 3 | 0,375 | 6,0 |
| 11 | TiO$_2$/BaSO$_4$ | 11 | 3 | 0,525 | 4,3 |

| Anwendungstechn. Prüfund | | | |
|---|---|---|---|
| | Beisp. 9 | Beisp. 10 | Beisp. 11 |
| Granulate größer als | 2 mm | 3 mm | 3 mm |
| Abrieb [%] | 1,1 % | 2,8 % | 2,3 % |

Beispiele 12 und 13

0,7 kg eines organ. Pigments (Carmin HF 3C rot, HOECHST AG) werden in einem Lödige-Mischer Typ M5, der mit einer verschleißfesten Kunststoff-Beschichtung versehen wurde, eingetragen und mit einer mit VE-Wasser verdünnten Wachsdispersion (Rezeptur I bzw. Rezeptur Va) bei laufendem Mischer (Rotordrehzahl 300 Upm) über eine Einstoffdüse besprüht. Nach einer Mischzeit von 29 bzw. 40 min. wird das Feuchtgranulat (Wassergehalt ca. 50 -51 Gew.%) entnommen, getrocknet und versiebt:

| Beisp. | Pigm. | Mischz. min. | Pigm.-Menge g | Dispersion | |
|---|---|---|---|---|---|
| | | | | Menge g | Wachsgeh. Gew.% |
| 12 | Carmin | 40 | 727 | 735 | 0,72 |
| 13 | Carmin | 29 | 705 | 733 | 0,72 |

| Anwendungstechn. Prüfung | | |
|---|---|---|
| | Beisp. 12 | Beisp. 13 |
| Kornspektrum | | |
| > 1 mm | 2,4 % | < 0,5 % |
| < 1 mm > 01 mm | 96,6 % | > 99,5 % |
| < 0,1 mm | 1,0 % | < 0,1 % |
| Schüttgewicht | 0,42 kg/l | 0,42 kg/l |
| Farbstärke | n.b. | n.b. |
| Farbabstand ΔC* | n.b. | 0,9 |
| ΔH* | n.b. | - 0,1 |
| n.b. = nicht bestimmt | | |

## Beispiel 14

700 g eines Farbrußes (Printex 60, Degussa AG) werden in einem Lödige-Mischer Typ M5 eingetragen und mit einer mit VE-Wasser verdünnten Wachsdispersion (Rezeptur Va) bei laufendem Mischer (Rotordrehzahl 300 Upm) über eine Einstoffdüse besprüht. Nach einer Mischzeit von 60 min. wird das Feuchtgranulat (Wassergehalt ca. 54 Gew.%) entnommen, getrocknet und versiebt:

| Beisp. | Pigm. | Mischz. min. | Pigm.-Menge g | Dispersion | |
|---|---|---|---|---|---|
| | | | | Menge g | Wachsgeh. Gew.% |
| 14 | Printex | 60 | 700 | 823 | 0,6 |

| Anwendungstechn. Prüfung | |
|---|---|
| | Beisp. 14 |
| Kornspektrum | |
| > 1 mm | 11,9 % |
| < 1 mm > 01 mm | 78,7 % |
| < 0,1 mm | 9,4 % |
| Schüttgewicht | 0,36 kg/l |
| Abrieb | 8,7 % |

Beispiele 15 - 21

Jeweils 2 kg eines Cadmiumsulfid- (Typ 1060. Degussa AG) oder Cadmiumsulfoselenidpigments (Typ 2001 , Degussa AG) werden in einem Lödige-Mischer Typ M5, der mit einer Kunststoff-Beschichtung versehen ist, eingetragen und mit VE-Wasser verdünnten Wachsdispersionen, denen unterschiedliche Netzmittel zugesetzt worden sind, (Rezepturen III, V,VI, VII, VIII) bei laufendem Mischer (Rotordrehzahl 300 Upm) über eine Einstoffdüse besprüht. Nach einer Mischzeit von 6 bis 16 min. wird das Feuchtgranulat (Wassergehalt ca. 17 Gew.%) entnommen, getrocknet und versiebt:

| Beisp. | Pigm. | Mischz. min. | Pigm.-Menge kg | Dispersion | |
|---|---|---|---|---|---|
| | | | | Menge kg | Wachsgeh. Gew.% |
| 15 | 1060 | 6 | 2 | 0,43 | 3,5 (RIII) |
| 16 | 2001 | 7,75 | 2 | 0,43 | 3,5 RVIa) |
| 17 | 2001 | 9,5 | 2 | 0,43 | 3,5 (RVa) |
| 18 | 2001 | 5,5 | 2 | 0,43 | 3,5 (RVII) |
| 19 | 2001 | 8,5 | 2 | 0,43 | 3,5 (RVb) |
| 20 | 2001 | 13 | 2 | 0,43 | 3,5 (RVIIIa) |
| 21 | 2001 | 16 | 2 | 0,43 | 3,5 (RVIIIb) |

| Anwendungstechn. Prüfung | | | | | | | |
|---|---|---|---|---|---|---|---|
| Beispiele | 15 | 16 | 17 | 18 | 19 | 20 | 21 |
| Kornspektrum | | | | | | | |
| > 1 mm (%) | 94,3 | 21,8 | 23,0 | 69,9 | 27,3 | 4,8 | 85,1 |
| < 1 mm > 01 mm (%) | 5,7 | 77,7 | 76,9 | 29,8 | 72,4 | 95,2 | 14,2 |
| < 0,1 mm (%) | 0,5 | 0,5 | 0,1 | 0,3 | 0,3 | 0,0 | 0,7 |
| Schüttgewicht | jeweils ca. 1,3 kg/l | | | | | | |
| Abrieb (%) | 1,7 | 4,7 | 2,4 | 2,5 | 2,0 | 1,3 | 8,8 |
| Dispergierhärte | 36 | 5 | 8 | 7 | 5 | 3 | 3 |
| Farbstärke (%) | 110 | 106 | 101 | 102 | 101 | 101 | 108 |
| Farbabstand $\Delta C^*$ | 1,6 | - 0,1 | - 0,4 | - 0,2 | -0,3 | - 0,7 | - 0,2 |
| $\Delta H^*$ | 0,3 | 0.0 | 0.0 | - 0,1 | 0,0 | - 0,3 | 0,0 |

Beispiele 22 - 25

Jeweils 2 kg eines Cadmiumsulfidpigments (Typ 1090 Degussa AG) werden in einem Lödige-Mischer Typ M5, der mit einer verschleißfesten Kunststoff-Beschichtung versehen ist, eingetragen und mit einer mit VE-Wasser verdünnten Wachsdispersion (Rezeptur I) bei laufendem Mischer (Rotordrehzahl 300 Upm) über eine Einstoffdüse besprüht. Nach verschiedenen Mischzeiten wird das Feuchtgranulat (Wassergehalt jeweils ca. 22 Gew.%) entnommen, getrocknet und versiebt:

| Beisp. | Pigm. | Mischz. min. | Dispersion | |
|---|---|---|---|---|
| | | | Menge kg | Wachsgeh. Gew.% |
| 22 | 1090 | 5 | 0,583 | 2,6 |
| 23 | 1090 | 6 | 0,583 | 2,6 |
| 24 | 1090 | 7 | 0,583 | 2,6 |
| 25 | 1090 | 8 | 0,583 | 2,6 |

| Anwendungstechn. Prüfung | | | | |
|---|---|---|---|---|
| Beispiele | 22 | 23 | 24 | 25 |
| Kornspektrum | | | | |
| > 1 mm (%) | 35,0 | 67,4 | 96,4 | 94,0 |
| < 1 mm > 01 mm (%) | 64,4 | 31,6 | 2,9 | 3,4 |
| < 0,1 mm (%) | 0,6 | 1,0 | 0,7 | 2,6 |
| Schüttgewicht | jeweils 1,3 kg/l | | | |

Beispiel 26
===

2 kg eines Cadmiumsulfoselenidpigments (Typ 2001, Degussa AG) werden in einem Lödige-Mischer Typ M5, der mit einer Kunststoff-Beschichtung versehen wurde, eingetragen und mit einer mit bestimmten Menge an VE-Wasser verdünnten Wachsdispersion (Rezeptur 11) bei laufendem Mischer (Rotordrehzahl 300 Upm) über eine Einstoffdüse besprüht. Nach einer Mischzeit von 7 min. wurde das Feuchtgranulat (Wassergehalt 17 Gew.%) entnommen, getrocknet und versiebt:

| Beisp. | Pigm. | Mischz. min. | Pigm.-Menge kg | Dispersion | |
|---|---|---|---|---|---|
| | | | | Menge kg | Wachsgeh. Gew.% |
| 26 | 2001 | 7 | 2 | 0,43 | 3,48 |

| Anwendungstechn. Prüfung | |
|---|---|
| | Beisp. 26 |
| Kornspektrum | |
| > 1 mm | 21,0 % |
| < 1 mm > 01 mm | 78,9 % |
| < 0,1 mm | 0,1 % |
| Schüttgewicht | 1,3 kg/l |
| Abrieb | 2,2 % |
| Dispergierhärte | 5 |
| Farbstärke | 105 % |
| Farbabstand ΔC* | - 1,0 |
| ΔH* | - 0,2 |

Beispiel 27

2 kg eines Cadmiumsulfoselenidpigments (Typ 2001, Degussa AG) werden in einem Lödige-Mischer Typ M5, der mit einer verschleißfesten Kunststoff-Beschichtung versehen wurde, eingetragen und mit der mit VE-Wasser verdünnten Wachsdispersion von Rezeptur VIb bei laufendem Mischer (Rotordrehzahl 300 Upm) über eine Einstoffdüse besprüht. Nach einer Mischzeit von 7 min. wurde das Feuchtgranulat (Wassergehalt 17 Gew.%) entnommen, getrocknet und versiebt:

| Beisp. | Pigm. | Mischz. min. | Pigm.-Menge kg | Dispersion | |
|---|---|---|---|---|---|
| | | | | Menge kg | Wachsgeh. Gew.% |
| 27 | 2001 | 7 | 2 | 0,43 | 3,5 |

| Anwendungstechn. Prüfung | |
|---|---|
| | Beisp. 27 |
| Kornspektrum | |
| > 1 mm | 23,2 % |
| < 1 mm > 01 mm | 76,4 % |
| < 0,1 mm | 0,4 % |
| Schüttgewicht | 1,3 kg/l |
| Abrieb | 2,3 % |
| Dispergierhärte | 4 |
| Farbstärke | 105 % |
| Farbabstand ΔC* | - 0,0 |
| ΔH* | 0,1 |

Beispiele 28 - 32

Jeweils 2 kg eines Cadmiumsulfidpigments (Typ 1090, Degussa AG) werden in einem Lödige-Mischer Typ M5, der mit einer verschleißfesten Kunststoff-Beschichtung versehen wurde, eingetragen und mit einer mit verschiedenen Mengen an VE-Wasser verdünnten, auf bestimmte Wachsgehalte eingestellten Wachsdispersion (Rezeptur I) bei laufendem Mischer (Rotordrehzahl 300 Upm) über eine Einstoffdüse besprüht.

Nach einer Mischzeit von jeweils 5 min. wurde das erhaltene Feuchtgranulat bzw. das erhaltene Pulver (Wassergehalt 22,5 - 23,5 Gew.%) entnommen, getrocknet und versiebt:

| Beisp. | Pigm. | Dispersion | | |
|--------|-------|------------|------------|------------|
| | | Menge kg | Wachsgeh. Gew.% | Restfeuchte Gew.% |
| 28 | 1090 | 0,613 | 2 | 23,0 |
| 29 | 1090 | 0,605 | 1 | 23,0 |
| 30 | 1090 | 0,601 | 0,5 | 23,0 |
| 31 | 1090 | 0,600 | 2,5 | 22,5 |
| 32 | 1090 | 0,634 | 2,36 | 23,5 |

| Anwendungstechn. Prüfung | | | | | | |
|--------------------------|------|------|------|------|------|------|
| Beispiele | 28 | 29 | 30 | 31 | 32 | |
| Kornspektrum | | | | | | |
| > 1 mm (%) | n.a. | 36,7 | n.a. | n.a. | n.a. | |
| < 1 mm > 01 mm (%) | n.a. | 61,0 | n.a. | n.a. | n.a. | |
| < 0,1 mm (%) | n.a. | 1,3 | n.a. | n.a. | n.a. | |
| Schüttgewicht | jeweiles 1,31 kg/l | | | | | |
| Dispergierhärte | 15 | 11 | n.a. | n.a. | n.a. | |
| Farbstärke | 104 | 107 | | | | |
| Farbabstand $\Delta C^*$ | 2,0 | 1,0 | n.a. | n.a. | n.a. | |
| $\Delta H^*$ | | 0,7 | 0,5 | n.a. | n.a. | n.a. |
| n.a. = nicht angebbar | | | | | | |

Bemerkungen:

Produkt aus Beisp. 28 ist ein Granulat > 2 mm
Produkt aus Beisp. 30 ist ein Mikrogranulat
Produkt aus Beisp. 31 ist ein pulverähnl. Material
Produkt aus Beisp. 32 ist ein Makrogranulat ca. 5 mm

**Ansprüche**

1. Staubarmes, leicht desagglomerierbares Feingranulat aus Pigment oder Farbstoff zur homogenen und farbechten Einfärbung von thermoplastischen Kunststoffen,
**gekennzeichnet durch**
einen Gehalt von nicht mehr als 1 Gew.% eines wachsartigen Bindemittels sowie eines unterhalb 0,5, vorzugsweise 0,3 Gew.% liegenden Restgehalts von Emulgator und gegebenenfalls Netzmittel und dadurch erhältlich, daß man das Pigment bzw. den Farbstoff in Pulverform in einem vorwiegend Turbulenz und Prallkräfte erzeugenden Mischgranulator mit einer 1 - 6, vorzugsweise 2 - 4 Gew%igen, gegebenenfalls Netzmittel enthaltenden wäßrigen Dispersion des wachsartigen Bindemittels in einer dem gewünschten Bindemittelgehalt des Endprodukts entsprechenden Menge, vorzugsweise durch Aufsprühen, zusetzt, die unter Volumenverminderung der Mischung verlaufende Granulierung nicht länger als bis zur Ausbildung eines feinkörnigen Granulats vornimmt, das Granulat aus dem Mischgranulator entnimmt, durch Trocknen entwässert und gegebenenfalls einem Siebvorgang zur Einengung des Kornspektrums unterwirft.

2. Pigment- oder Farbstoff-Feingranulat nach Anspruch 1

**dadurch gekennzeichnet**,

daß das wachsartige Bindemittel Paraffinwachs, Polyethylenwachs, eine höhere Fettsäure oder Gemische davon, ein Fettalkohol oder Gemische davon, ist.

3. Pigment- oder Farbstoff-Feingranulat nach Anspruch 2

**dadurch gekennzeichnet**,

daß das Bindemittel einen Schmelz- oder Tropfpunkt von 30 - 150, vorzugsweise 50 - 130° C, hat.

4. Pigment- oder Farbstoff-Feingranulat nach den Ansprüchen 1 bis 3,

**dadurch gekennzeichnet**,

daß es unter Verwendung einer adhäsions- und reibungsvermindernden Beschichtung, vorzugsweise aus Polytetrafluorethylen, auf Innenwänden und/oder Mischorganen des Mischgranulators bereitet ist.

5. Pigment- oder Farbstoff-Feingranulat nach den Ansprüchen 1 bis 4,

**dadurch gekennzeichnet**,

daß als Netzmittel ein kationisches, nichtionisches, anionisches oder fluorhaltiges Tensid vorliegt.

**Europäisches Patentamt**

# EUROPÄISCHER RECHERCHENBERICHT

Nummer der Anmeldung

## EP 90 12 0357

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 843 380 (E.BEYN) <br> * Spalte 5, Zeile 11 - Spalte 6, Zeile 55; Ansprüche 14-18 * <br> — — — | 1-3 | C 08 <br> J 3/20 <br> C 09 C 3/04 |
| A,D | DE-A-3 132 303 (BAYER AG) <br> * Beispiele; Ansrüche * <br> — — — — — | 1-5 | C 09 C 3/08 <br> C 09 C 3/10 <br> C 08 K 9/04 <br> C 08 K 9/08 |

| RECHERCHIERTE SACHGEBIETE (Int. Cl.5) |
|---|
| C 08 J <br> C 09 C <br> C 08 K <br> C 08 L |

Der vorliegende Recherchenbericht wurde für alle Patentansprüche erstellt

| Recherchenort | Abschlußdatum der Recherche | Prüfer |
|---|---|---|
| Den Haag | 17 Januar 91 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument